# EUROPÄISCHE PATENTANMELDUNG

(11) **EP 2 107 506 A1**
(43) Veröffentlichungstag der Anmeldung: **07.10.2009**
(21) Anmeldenummer: 08006726.7
(22) Anmeldetag: 02.04.2008
(51) Int. Cl.: G06K 9/52, G07D 7/12

(54) **Verfahren zur kennzeichnungsfreien Identifikation uniformer Objekte in Produktionslinien**

(71) Anmelder: BCS machine vision GmbH, 84375 Kirchdorf am Inn (DE)
(72) Erfinder: Baldauf, Wolfgang Konstantin, 84375 Kirchdorf am Inn (DE)

(57) **Zusammenfassung**

Verfahren zur Identifikation und zur Verfolgung uniformer Objekte (11, 12, ...,21,...) insbesondere Druckbogen über den gesamten Produktionsprozess hinweg. Dabei werden weder individualisierende Kennzeichnungen wie Seriennummern oder Barcodes angebracht, noch solche verwendet. Stattdessen erfolgt die Identifizierung der Objekte aufgrund vorhandener kleiner individueller optischer Unterscheidungsmerkmale, welche mit einer Aufzeichnungseinrichtung (50,80) in der ersten Objektbearbeitungsstation (10) der Produktionslinie erfasst und als individuelle Merkmaldatensätze (Identifikatoren) gespeichert werden. Diese Identifikatoren werden dann an den nachfolgenden Bearbeitungsstationen (20) in Leseeinrichtungen (60, 90) dazu benutzt, die dort bearbeiteten Objekte zu identifizieren (64).

## Beschreibung

Die Erfindung betrifft ein Verfahren zur automatischen Identifizierung uniformer Objekte zum Zwecke ihrer Verfolgung in Produktionslinien, anwendbar insbesondere - aber nicht ausschließlich - in der Druckindustrie, um individuelle Druckbogen durch den gesamten Produktionsprozess eindeutig zu identifizieren.

Vor allem im Sicherheitsdruck, insbesondere bei der Herstellung von Banknoten, Briefmarken, Ausweisen, Losen, Scheckformularen und ähnlichem, besteht das Interesse, alle Druckbogen und deren Einzelnutzen über den gesamten Produktionsprozess möglichst an allen Maschinen zu erfassen und zu verfolgen. In der Regel durchlaufen die Druckbogen dabei der Reihe nach verschiedene Druckmaschinen für den Sieb-, Offset-, Stich- und Nummerndruck und Bearbeitungsmaschinen für die Applikation von Folien und das Schneiden der Bogen, bis hin zu Sortiereinrichtungen und Verpackungsmaschinen. Vor allem wegen der erforderlichen Trocknungszeiten zwischen den einzelnen Druckstufen kann der Durchlauf durch den gesamten Produktionsprozess mehrere Wochen oder gar Monate dauern, wodurch sich jeweils Millionen von Druckbogen in der Pipeline befinden. Zum Zwecke der Rückverfolgbarkeit jedes einzelnen Bogens und seiner Teile werden auch aus Sicherheitsgründen Datenbanken aufgebaut. Dazu ist eine Identifizierung der einzelnen Druckbogen erforderlich, was jedoch nicht lediglich aufgrund ihrer sequenziellen Abfolge innerhalb der Bogenstapel erfolgen kann, da an allen Bearbeitungsmaschinen immer wieder einzelne Bogen ausgeschleust, eingefügt und entnommen werden. Herkömmlicherweise wird zur eindeutigen Kennzeichnung der Druckbogen eine Seriennummer in Klarschrift oder als Barcode auf dem unbedruckten Rand jedes Bogens aufgebracht.

Es gibt noch einen anderen Grund, warum insbesondere Druckbogen mit Mehrfachnutzen gekennzeichnet werden. Viele Druckmaschinen besitzen eingebaute Inspektionssysteme zur automatischen Überwachung der Druckqualität. Fehlerhafte Bogen können zwar an vielen Maschinen direkt ausgeschleust werden, aber zum Zwecke einer späteren Aussortierung lediglich einzelner fehlerhafter Nutzen auf diesen Druckbogen muss eine Kennzeichnung dieser Nutzen erfolgen.

Um bei Bogen mit Mehrfachnutzen nicht den ganzen Bogen ausschleusen zu müssen, wenn nur einzelne wenige Nutzen darauf fehlerhaft sind, schlägt EP0612042B2 ein Verfahren vor, bei dem mittels einer Vielzahl von Inkjet-Druckköpfen die jeweils fehlerhaften Einzelnutzen (Banknoten) innerhalb des Druckbogens mit einem Ungültigkeitsvermerk (reject mark) versehen werden. Nach dem Schneiden kann eine nachfolgende Sortiermaschine diese Markierungen erkennen und die fehlerhaften Banknoten aussortieren. Wegen der vielen Inkjet-Druckköpfe ist dieses Verfahren relativ aufwendig und auch störanfällig. Zudem werden dabei auch irrtümlich markierte Nutzen unwiderruflich unbrauchbar gemacht.

In EP1844865A1 ist ein Verfahren ohne physikalische Markierungen der Einzelnutzen beschrieben. Tragen die Objektverbände (Mehrfachnutzen-Druckbogen) individuelle Kennzeichnungen, z.B. in Form aufgedruckter Bogenseriennummern oder Barcodes, können sie automatisch wiedererkannt werden. Dies erlaubt es, fehlerhafte Nutzen ohne Markierung aufgrund der Bogenkennung und der abgespeicherten Spalten- und Zeilenkoordinaten nach dem Schneiden automatisch auszusortieren, selbst wenn die sequentielle Reihenfolge der Bogen innerhalb der Stapel gestört wurde. In obengenannter Patentanmeldung wird auch eine Ausführungsform vorgeschlagen, bei der die Prüfergebnisse eines automatischen Inspektionssystems bzw. die Zeilen- und Spaltenadressen fehlerhafter Nutzen auf den Bogenrand aufgedruckt und dadurch dort zwischengespeichert werden. Eine Variante dieser Markierungsmethode versucht DE102006028482A1 anzumelden, wo Mehrfachnutzen-Druckbogen durch Klebezettel mit den aufgedruckten Koordinaten ihrer fehlerhaften Nutzen (Faltschachteln) markiert werden.

Alle oben beschriebenen Verfahren zur Identifikation von Druckbogen - und/oder Einzelnutzen daraus - bringen an den Objekten individualisierende Kennzeichnungen an, meist durch Aufdrucken von Marken, Nummern oder Barcodes mit Inkjet-Druckköpfen. Diese Methode erweist sich in der Praxis oft als problematisch. So kann es bei Inkjet-Druckköpfen immer wieder zu Störungen aufgrund verstopfter Düsen und fehlender Tinte kommen. In Druckmaschinen, wo die Bogen mit kettengetriebenen Greiferarmen transportiert werden, kommt hinzu, dass konstruktionsbedingt ein relativ großer Abstand zwischen Papier und Druckkopf eingehalten werden muss. Aufgrund von Spritzern, Sprühnebeln, Positionsschwankungen im Bogentransport oder falscher Justage kann es sogar zur Verschmutzung der Nutzen kommen. Aber auch sonst leidet die Druckqualität des Aufdrucks vor allem unter der hohen Transportgeschwindigkeit der Druckbogen. Folge davon sind Kontrast- und Größenschwankungen, Verschmieren, Spritzer, Flecken sowie dadurch verursachte Lesefehler in nachfolgenden Sensoren. Dabei ist gerade und vor allem bei der Bogenverfolgung im Bereich des Sicherheitsdrucks eine extrem hohe Zuverlässigkeit unabdingbar. Die alternative Anwendung von Lasern zur Beschriftung ist oft aufgrund der Materialbeschaffenheit der Objekte und ihrer hohen Transportgeschwindigkeit schwierig und nicht zuletzt aufwendig. Es fehlt wegen der bei ihrer Anwendung notwendigen Schutzmaßnahmen häufig auch an Akzeptanz.

Aufgabe der vorliegenden Erfindung ist es daher, ein Verfahren zur Identifizierung, Verfolgung und Sortierung von uniformen Objekten vorzuschlagen, bei welchem keinerlei aktive physikalische Markierung oder Kennzeichnung der Objekte erforderlich ist, insbesondere ein individualisierender Aufdruck weder erfolgt, noch zur Identifikation von Objekten verwendet wird. Dabei soll es sogar nach einer Vermischung der Objektreihenfolge möglich sein, jedes einzelne Objekt zuverlässig wiederzuerkennen.

Die erfinderische Lösung besteht darin, dass anstelle der herkömmlichen individualisierenden Kennzeichnung durch Aufdrucken oder Etikettieren mit Seriennummern, Barcodes und dergleichen, stattdessen bereits vorhandene kleine optisch erfassbare individuelle Unterschiede als Merkmale der Objekte aufgezeichnet und zur Identifizierung der einzelnen Objekte an anderen Bearbeitungsstationen der Produktionslinie verwendet werden.

Insbesondere Druckbogen sind Objekte von hoher Uniformität, bei denen ein Höchstmaß an Gleichheit angestrebt wird, und bei denen alle wahrnehmbaren individuellen Abweichungen als Fehler angesehen werden. Daher kommen als individuelle Merkmale nur sehr kleine, makroskopisch nicht oder kaum wahrnehmbare Unterschiede in Frage, z.B. in der Papierstruktur oder in den Wasserzeichen. Druckbogen bestehen aus Papier ( z.T. mit Textilbeimengungen), also einem Stoffgemisch, das niemals perfekt und ebenmäßig ist. Unter der Lupe betrachtet, erkennt man eine lokal unregelmäßige Verteilung von helleren und dunkleren Stellen, Fasern und Farbschwankungen. Ist der betrachtete Ausschnitt und die Bildauflösung groß genug und somit auch die Datenmenge, ergibt sich eine unverwechselbare Struktur, die ausschließlich für den betrachteten Ausschnitt charakteristisch ist. Ein automatisches Bildverarbeitungssystem erkennt mit geeigneter Software diesen Bildausschnitt aufgrund seiner individuellen Eigenschaften zuverlässig und eindeutig wieder, ähnlich einem Fingerabdruck. Neben der Papierstruktur selbst gibt es noch andere erfassbare individuelle Unterschiede. So bewirkt die faserige Struktur des Papiers zudem, dass die Druckfarben in unterschiedlicher Weise verlaufen und individuelle Muster bilden, v.a. an Druckkanten und -linien sichtbar. Ähnlich verhält es sich an den Ausfransungen der Schnittkanten. Makroskopisch identische Druckbogen erscheinen somit mikroskopisch durchaus verschieden und individuell. Derartige Merkmale sind vor allem im Durchlicht und in schrägem Auflicht mittels elektronischer Kameras gut erfassbar. Sie werden von Bildverarbeitungssystemen extrahiert und in einem den individuellen Bogen charakterisierenden Datensatz gespeichert, dem sogenannten Identifikator.

Ein wesentliches Merkmal dieses Verfahrens ist es also, dass das Wiedererkennen der uniformen Objekte nicht durch Lesen zusätzlich angebrachten Marken oder klassifizierbarer Zeichen erfolgt, sondern indirekt aufgrund einer Datei, in welcher jedes Einzelobjekt durch seinen Identifikator vertreten ist, einen Datensatz, der gewonnen wird, wenn ein zu bearbeitendes Objekt zum ersten Mal in der Produktion erscheint, normalerweise an der ersten Maschine im Produktionsprozess. An den nachfolgenden Maschinen wird das Kamerabild jedes aktuell bearbeiteten Objekts jeweils mit den gespeicherten Identifikatoren aller bereits erfassten und noch gültigen, sich noch im Produktionsprozess befindlichen Objekte verglichen. Bei hinreichender Übereinstimmung gilt das Objekt als erkannt. Wenn das Objekt schließlich den gesamten Produktionsprozess durchlaufen und ihn endgültig verlassen hat, kann - um die Zahl der erforderlichen Vergleiche beim Wiedererkennen klein zu halten - der zugehörige Identifikator gelöscht oder deaktiviert werden. Ein weiterer Vorteil dieses Verfahrens - im Gegensatz zu aufgedruckten Nummern oder Barcodes - ist die hohe Manipulations- und Fälschungssicherheit der verwendeten natürlichen individuellen Strukturmerkmale.

Bei der Implementierung des Verfahrens ist auf ein sicheres Erfassen und Wiedererkennen der individuellen Strukturen und auf eine ausreichende Verarbeitungsgeschwindigkeit und Datenspeichergröße zu achten.

Für ein sicheres Erfassen und Wiedererkennen der Merkmale sind stabile Abbildungsverhältnisse unbedingte Voraussetzung. Dazu gehören verschiedene technische Maßnahmen:
- mechanische Stabilisierung des Bogens im Messfeld, v.a. des Abstandes zwischen Kamera und Bogen, z. B. durch Ansaugen oder Blasen
- Verwendung von telezentrischen Objektiven, um eine Bildgrößenänderung bei einer Schwankung des Bogenabstandes zur Kamera zu verhindern,
- eine gute Schärfentiefe,
- eine den Umständen angepasste Beleuchtung mit hellem Auflicht und/oder Durchlicht unterschiedlicher Wellenlängen (weiß, farbig, infrarot, ultraviolett).

Am Beispiel einer typischen Sicherheitsdruckerei soll aufgezeigt werden, mit welchen Anforderungen an die Verarbeitungsgeschwindigkeit und Datenspeichergröße zu rechnen ist. Im Sicherheitsdruck kann es aufgrund des komplexen Herstellungsprozesses zu Durchlaufzeiten einzelner Bogen von bis zu einem Jahr kommen. Pro Schicht und Linie werden täglich bis zu 70000 Bogen gefahren. Somit kann eine Druckerei mit 3 Schichten und 3 Linien täglich etwa eine habe Millionen Bogen bearbeiten, was bei einer mittleren Bogenlaufzeit von einem Monat bis zu 15 Millionen Bogen bedeutet, die sich gleichzeitig im Produktionsprozess befinden und deren Identifikatoren daher als gespeicherte Datensätze berücksichtigt werden müssen. Wenn Bogen die Pipeline der Produktionslinien bzw. die Druckerei verlassen, können deren Identifikatoren in der Datenbank gelöscht oder deaktiviert werden. Ein Abspeichern und Vergleichen ganzer Bildausschnitte als Identifikatoren würde bei der Vielzahl aller in Frage kommenden Bogen sehr großen Datenspeicher und sehr hohe Rechenleistungen erfordern. Um die üblicherweise geforderten Verarbeitungsgeschwindigkeiten von etwa 3 Bogen pro Sekunde zu erreichen muss die Bildverarbeitungszeit minimiert werden. Daher werden den Bildausschnitten lediglich besonders charakteristische Merkmale entzogen und als Identifikatoren abgespeichert, und es wird der Suchbereich für das Auffinden der Bildausschnitte stark eingegrenzt, indem diese Bildausschnifte relativ zu gut erkennbaren Referenzpositionen definiert werden, z.B. relativ zu Schnittkanten, Ecken, Metallfäden, Druck- und Folienelementen. Jeder aktuell in einer Maschine bearbeitete Bogen wird dann bezüglich des gleichen Bildausschnitts an der selben Stelle des Bogens mit allen gespeicherten Identifikatoren verglichen und es wird beurteilt, ob eine zur Identifizierung ausreichende Übereinstimmung besteht.

Das hier beschriebene Verfahren verwendet also einen zum Materialstrom parallelen Datenfluss, in dem jedes einzelne Objekt durch seinen individuellen Datensatz - seinen Identifikator - vertreten ist.
Die Verfahrensschritte hierbei sind:
- Gewinnung und Speicherung der individueller Identifikatoren der Objekte,
- Wiedererkennung der Objekte aufgrund ihrer Identifikatoren .
   Ein Identifikator ist ein Datensatz bestehend aus den individuellen Merkmalen einzelner Objekte. Dies können alle physikalisch meßbaren und optisch erfassbaren Größen sein, in welchen ein Objekt sich von anderen Objektindividuen unterscheidet, insbesondere mikroskopisch kleine, optisch erfassbare Unterschiede in der Materialstruktur. Die zur Erfassung und Auswertung der Bilddaten notwendigen Funktionen müssen nicht notwendigerweise in gesonderten Merkmalsensoren verkörpert sein, sie können auch in andere Inspektionssysteme integriert sein.

Es erscheint sinnvoll, den Identifikatoren und damit ihren zugehörigen Objekten interne Kennungen wie Seriennummern oder ähnliche Zeichenketten zuzuordnen. Diese können sequenziell beim erstmaligen Erscheinen der Objekte im Produktionsprozess vergeben werden und zusammen mit den Identifikatoren abgespeichert werden. Zugeordnete Seriennummern erleichtern eine Bezugnahme auf die Objekte innerhalb der Produktion und können die Objekte bezeichnend vertreten. Identifikatoren eignen sich für diesen Zweck aufgrund ihrer großen Länge und Datenmenge weniger gut.

Zur Erhöhung der Erkennungssicherheit können pro Objekt auch mehrere Bildfelder und damit auch mehrere Merkmalsätze als Identifikator angelegt werden.

Bei der Verwendung von lokalen Speichern in den einzelnen Identifikator-Aufzeichnungs- (50) und Lesegeräten (60) muss dafür gesorgt werden, dass die Daten darin immer aktuell sind. Daher erfolgt über eine Datenverbindung (70) eine möglichst zeitnahe Aktualisierung der Speicherdaten (53, 63, 103).

Das Lesegerät (60) zum Wiedererkennen der Bogen muss nicht notwendigerweise fest in eine Maschine integriert sein, es kann auch ein Offline- oder Handgerät sein. Wie jedes Lesegerät (60) muss es in das Netzwerk (70) aller Aufzeichnungs- (50) und Lesegeräte eingebunden sein, um Zugriff auf die aktuellen Daten zu haben. Dabei können die zugeordneten internen Seriennummern angezeigt und/oder ausgegeben werden.

Aufzeichnungs- (50,80) und Lesegeräte (60,90) unterscheiden sich primär durch ihre Aufgabe voneinander, nicht notwendigerweise durch ihre Hardware. So können beide die jeweilige Funktion des anderen übernehmen. Wird z.B. an einer ersten Druckmaschine, die normalerweise unbedruckte frische Bogen bekommt, ein Bogen aufgrund eines Transportproblems unbedruckt wieder ausgesteuert und später erneut durch dieselbe Maschine geschickt, kann dieser Bogen vom Aufzeichnungsgerät als bereits registriert erkannt und entsprechend behandelt werden. Umgekehrt kann auch im Lesegerät (60) einer nachfolgenden Bearbeitungsmaschine ein unbekannter bzw. unerkannter Bogen in einem Spezialdatensatz neu angelegt werden. Andere Spezialdatensätze werden z.B. für Ersatzbogen angelegt, welche unter Umständen als halbfertige Produkte zum Zwecke des Ersatzes defekter Bogen über längere Zeit bevorratet werden.

Immer wenn ein Objekt aufgrund seines Identifikators erkannt wird, entsteht die Information "Objekt erkannt" (64). Diese Information kann in unterschiedlichster Weise verwertet werden. So kann ein Signal zur Aussteuerung des Objekts mittels einer Weiche ausgegeben werden. Die Information kann aber auch an andere Systeme übertragen werden, wo sie mit weiteren Daten verknüpft wird und eventuell ein Eintrag in einer Datenbank vorgenommen wird. Intern wird jedem Objekt dabei eine Seriennummer zugeordnet, durch welche es für Bezugnahmen adressierbar und benennbar ist. Die Erkennungsinformation (65) dient an der letzten Station der Bearbeitungskette dazu, den Identifikator derjenigen Objekte, welche die Produktion verlassen haben, zu deaktivieren bzw. aus der Vergleichsliste des Datenspeichers (53, 63, 103) zu streichen.

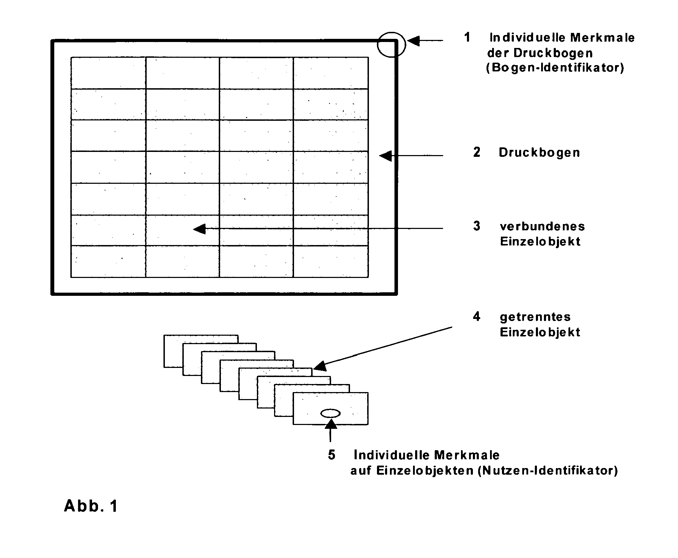

Abb. 1 zeigt oben beispielhaft als typischen uniformen Objektverband einen Druckbogen (2) bestehend aus verbundenen Einzelobjekten (3) und einem unbenutzten Bogenrand. Der untere Teil der Abbildung 1 zeigt die Einzelobjekte (4) nach dem Schneiden, wobei die unbenutzten Randteile Abfall sind. Sowohl auf dem unbenutzte Rand des Objektverbandes als auch auf den Einzelobjekten (3, 4) selbst befinden sich individuelle Merkmale als Bogen-Identifikatoren (1) und als Nutzen-Identifikatoren (5), die deren eindeutige Identifizierung erlauben.

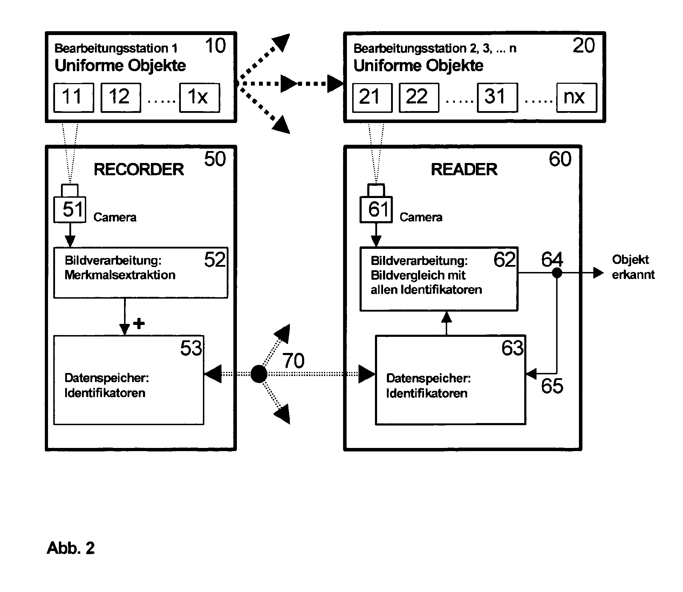

Abb. 2 zeigt beispielhaft eine Ausführungsform, bei der die Sensoren (50, 60) (Recorder, Reader) an der Bearbeitungsstation (10, 20) (z.B. einer Druckmaschine) neben den Bildaufnahmeeinrichtungen (Cameras) (51, 61) bereits die Bildverarbeitungs- (52, 62) und Datenspeichereinrichtungen (53, 63) enthalten. Eine Produktionslinie besteht aus mehreren Bearbeitungsmaschinen (10, 20)(z.B. Druckmaschinen). Die Objekte (11, 12, ...20, 22, ...) werden in einer oder mehreren ersten Produktionsvorrichtungen (10) (z.B. Druckmaschinen) zum ersten Mal bearbeitet. Der Materialstrom aus Objekten (11,12,...) durchläuft dann die weiteren Bearbeitungsmaschinen zum Teil nacheinander, kann aber auch in Teilströme aufgespaltet sein bzw. es können sich Teilströme wieder vereinen. Insbesondere kann in Produktionsstätten mit mehreren parallelen Linien mit parallel laufenden Maschinen derselben Art ein Überkreuzen und Vermischen der Materialströme stattfinden. So kann z. B. ein Banknotenbogen zunächst eine von mehreren Siebdruckmaschinen durchlaufen, wo individuelle Merkmale des Druckbogens als Identifikatoren gewonnen und aufgezeichnet werden, später wird er in einer der Offsetdruckmaschinen, der Folienapplikationsmaschinen, der Stichdruckmaschinen und schließlich der Schneidemaschinen bearbeitet. In jeder dieser weiteren Bearbeitungsstationen (20) kann der Banknotenbogen aufgrund seiner zuvor gewonnenen und gespeicherten Merkmale, dem Identifikator, mit Hilfe von Lesegeräten wiedererkannt werden.

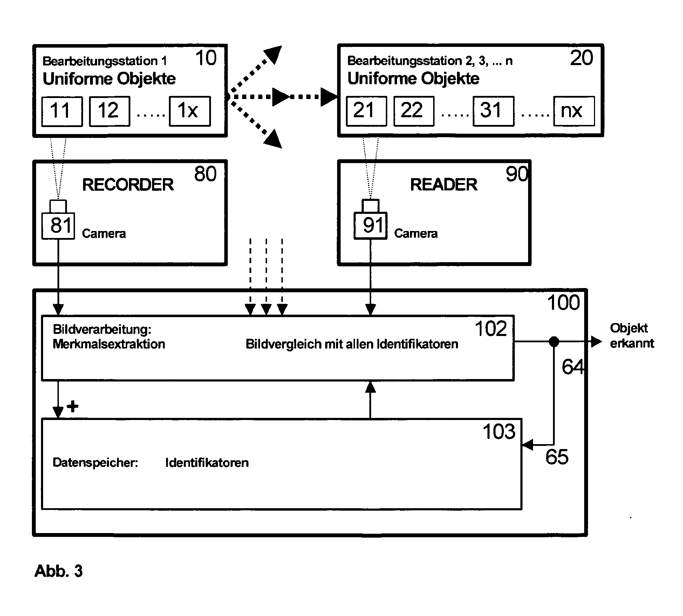

Abb. 3 zeigt beispielhaft eine Ausführungsform, bei der Sensoren (80, 90) an Bearbeitungsstationen (10, 20) nur die Bildaufnahmeeinrichtungen (81, 91) enthalten, die Bildverarbeitung (102) und Datenspeicherung (103) jedoch zentral in einer gemeinsamen Verarbeitungseinheit (100) stattfinden.

## Patentansprüche

1. Verfahren zur eindeutigen Identifikation von uniformen Objekten (3, 11, 12, 1 x, 21, 22, 31, nx) und/oder Teilen (3, 4) daraus, insbesondere anwendbar im Sicherheitsdruck bei der Herstellung von Banknoten, Ausweisen und dergleichen. Das Verfahren ist **dadurch gekennzeichnet, dass** zur Identifikation der Objekte keinerlei individualisierende Markierungen oder Kennzeichnungen aufgebracht oder verwendet werden, sondern bereits vorhandene optisch erfassbare kleine Objektunterschiede als individuelle Merkmale benutzt werden, indem im Produktionsablauf an mindestens einer Objektbearbeitungsstation (10) Bilder der Objekte oder seiner Teile mittels einer Aufzeichnungseinrichtung (50,80) erfasst und daraus individuelle Merkmaldatensätze (Identifikatoren) (1, 5) gewonnen und gespeichert werden, die an mindestens einer weiteren Objektbearbeitungsstation (20) mittels einer Leseeinrichtung (60, 90) mit den Bilddaten der dort bearbeiteten Objekte zum Zwecke der Identifizierung verglichen werden.

2. Verfahren nach Anspruch 1, **dadurch gekennzeichnet, dass** die gewonnen individuellen Merkmaldaten auf Unterschieden in der lokalen Materialstruktur beruhen.

3. Verfahren nach Anspruch 1, **dadurch gekennzeichnet, dass** individuelle Merkmaldaten relativ zu Referenzpositionen im Objekt definiert werden.

4. Verfahren nach Anspruch 1, **dadurch gekennzeichnet, dass** die Sensoren zum Aufzeichnen (50) und zum Lesen (60) der individuellen Merkmaldaten neben den Bildaufnahmeeinheiten (51, 61) auch die Funktionen der Bildverarbeitung (52, 62) und der Datenspeicherung (53, 63) bereits integriert haben und über einen Datenaustausch (70) verfügen, um ihre Datenspeicher untereinander zu aktualisieren.

5. Verfahren nach Anspruch 1, **dadurch gekennzeichnet, dass** mehrere Sensoren zum Aufzeichnen (50, 80) und/oder zum Lesen (60, 90) der individuellen Merkmaldaten gemeinsame Bildverarbeitungs- (102) und/oder Datenspeichereinrichtungen (103) benutzen.

6. Verfahren nach Anspruch 1, **dadurch gekennzeichnet, dass** eine Beleuchtung im Auflicht- oder Durchlichtverfahren im oder außerhalb des sichtbaren Spektrums erfolgt.

7. Verfahren nach Anspruch 1, **gekennzeichnet dadurch, dass** für die Bildaufnahmeeinrichtungen (51, 61, 81, 91) telezentrische Objektive verwenden werden.

8. Verfahren nach Anspruch 1, **gekennzeichnet dadurch, dass** die Funktionen für die Gewinnung und/oder Wiedererkennung der individuellen Merkmaldaten in einem Qualitätsinspektionssystem integriert sind.

9. Verfahren nach Anspruch 1, **gekennzeichnet dadurch, dass** den Identifikatoren Seriennummern der Objekte zugewiesen werden.
